(19) Europäisches Patentamt / European Patent Office / Office européen des brevets

(11) **EP 4 629 476 A1**

(12) **EUROPEAN PATENT APPLICATION**

(43) Date of publication:
08.10.2025 Bulletin 2025/41

(21) Application number: 25163919.1

(22) Date of filing: 14.03.2025

(51) International Patent Classification (IPC):
$H02J\ 7/34^{(2006.01)}$    $H01M\ 16/00^{(2006.01)}$
$H01M\ 8/04089^{(2016.01)}$    $H01M\ 8/04225^{(2016.01)}$
$H01M\ 8/04302^{(2016.01)}$    $H01M\ 8/04537^{(2016.01)}$
$H01M\ 8/0432^{(2016.01)}$    $B60L\ 58/31^{(2019.01)}$
$B60L\ 58/40^{(2019.01)}$    $H01M\ 8/04858^{(2016.01)}$
$H01M\ 8/04746^{(2016.01)}$    $B60L\ 58/14^{(2019.01)}$
$B60L\ 58/15^{(2019.01)}$    $H01M\ 8/10^{(2016.01)}$

(52) Cooperative Patent Classification (CPC):
H01M 8/04302; B60L 58/14; B60L 58/15;
B60L 58/31; B60L 58/40; H01M 8/04089;
H01M 8/04225; H01M 8/0432; H01M 8/04649;
H01M 8/04656; H01M 8/04753; H01M 8/0494;
H01M 8/04947; H01M 16/00; H02J 7/34;    (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.04.2024 US 202463573233 P

(71) Applicant: Carrier Corporation
Palm Beach Gardens, FL 33418 (US)

(72) Inventors:
• SHAH, Vaibhav
500081 Hyderabad (IN)
• SAHOO, Satyanjay
500081 Hyderabad (IN)
• DONG, Liujia
Palm Beach Gardens, FL 33418 (US)
• VARIGONDA, Subbarao
Indianapolis, IN 46231 (US)
• JUNNURI, Venkata Satya Sai Ramesh Kumar
500081 Hyderabad (IN)

(74) Representative: Dehns
10 Old Bailey
London EC4M 7NG (GB)

(54) **HYBRID FUEL CELL SYSTEM AND OPERATING METHOD THEREOF**

(57) A hybrid fuel cell system (100) is disclosed. The hybrid fuel cell (100) comprises a fuel cell (102) adapted to supply power to a load (106). The hybrid fuel cell (100) further comprises an Electrical Air Compressor, EAC, unit (114) operatively coupled with the fuel cell (102). Also, the hybrid fuel cell (100) comprises an auxiliary power source (112) connected to the EAC unit (114) via a Direct Current to Alternating Current, DC-AC, converter (108). Furthermore, the hybrid fuel cell (100) comprises a converter circuit (110) configured to perform at least one of enable the auxiliary power source (112) to supplement the fuel cell (102) to provide collective power supply to a load (106) during the initialization phase of the fuel cell (102), enable the fuel cell (102) to provide either the input power supply or a supplement power supply to the EAC unit (114) during an operational phase of the fuel cell (102), or enable the fuel cell (102) to charge the auxiliary power source (112).

FIG. 1

(Cont. next page)

EP 4 629 476 A1

(52) Cooperative Patent Classification (CPC): (Cont.)
H01M 2008/1095; H02J 2300/30

Description

## CROSS REFERENCE TO RELATED APPLICATION

This application claims the benefit of U.S. Provisional Patent Application No. 63/573,233 filed on April 2, 2024, which is incorporated by reference herein in its entirety.

## FIELD OF THE INVENTION

The invention relates to Proton Exchange Membrane Fuel Cell (PEMFC), and more specifically to a hybrid fuel cell system and a method of operating thereof.

## BACKGROUND

Proton Exchange Membrane Fuel Cells (PEMFCs) are the most commonly used energy devices for various applications including transportation and stationary power generation. However, cold start-up of the PEMFCs presents a significant challenge and is one of the ongoing areas of industrial research and development. This difficulty arises from the dependence of PEMFC power output on operational factors like stack humidification and operating temperature. During cold starts, the PEMFC stack tends to be dry, and have low operating temperature, limiting the capacity of the PEMFC to meet an initial load demand effectively.

Furthermore, in conventional PEMFC systems, an Electrical Air Compressor (EAC) to supply the PEMFC stack with a required amount of oxygen from the air for a required electrochemical reaction to occur, is powered via the PEMFC only. However, as discussed above, during the cold start-up, the PEMFC takes some time to reach the operation condition, this prolongs the EAC start-up time and thereby further delays the start-up of the PEMFC.

Therefore, it is desirable to provide a system and a method that improves cold start-up of the PEMFC or fuel cells.

## SUMMARY

This summary is provided to introduce a selection of concepts, in a simplified format, that are further described in the detailed description of the invention. This summary is neither intended to identify key or essential inventive concepts of the invention and nor is it intended for determining the scope of the invention which is set out in the appended claims.

According to a first aspect of the invention there is provided a hybrid fuel cell system. The hybrid fuel cell system comprises a fuel cell adapted to supply power to a load. Further, the hybrid fuel cell system comprises an Electrical Air Compressor (EAC) unit operatively coupled with the fuel cell. The hybrid fuel cell system comprises an auxiliary power source connected to the EAC unit via a Direct Current to Alternating Current (DC-AC) converter. The auxiliary power source is configured to provide an input power supply to the EAC unit at least during an initialization phase of the fuel cell. Furthermore, the hybrid fuel cell system comprises a converter circuit configured to perform at least one of enabling the auxiliary power source to supplement the fuel cell to provide collective power supply to a load during the initialization phase of the fuel cell, enabling the fuel cell to provide either the input power supply or a supplement power supply to the EAC unit during an operational phase of the fuel cell, or enabling the fuel cell to charge the auxiliary power source.

Optionally, the hybrid fuel cell system further comprises a Downstream Power Electronics (DPE) circuit connected to the fuel cell, the auxiliary power source, and the load. The DPE circuit is configured to generate the collective power supply for the load based on power supply received from the fuel cell and the auxiliary power source.

Optionally, the DPE circuit comprises at least one of a DC-DC boast converter, an inverter, and a single-stage boost inverter.

Optionally, the auxiliary power source comprises at least one of a super capacitor, an ion battery, a low temperature metal battery, and a low temperature colloid battery.

Optionally, the hybrid fuel cell system further comprises a controller configured to control the DC-AC converter to regulate the input power supply to the EAC unit from the auxiliary power source during the initialization phase of the fuel cell.

Optionally, the hybrid fuel cell system further comprises an air flow controller connected to the EAC, wherein the air flow controller is configured to maintain an air flow rate within the fuel cell during at least one of the initialization phase and the operational phase of the fuel cell.

According to a second aspect of the invention there is provided a method of operating a hybrid fuel cell system comprising at least one fuel cell and an auxiliary power source. The method comprises providing an initial input power to a load via the auxiliary power source for a first timer interval during an initialization phase of the fuel cell. The method further comprises determining whether a temperature of the fuel cell reaches an operating temperature of the fuel cell. Furthermore, the method comprises operating the fuel cell in an operational phase if the temperature of the fuel cell reaches the operating temperature.

Optionally, the initialization phase corresponds to a time period required by the fuel cell to reach an operating condition, associated with the operating temperature, from a cold temperature condition.

Optionally, the method further comprises during the initialization phase of the fuel cell, selectively controlling power supply from the auxiliary power source and the fuel cell to supply collective power supply to the load for a second time interval based at least on a State of Charge (SOC) of at least one of the auxiliary power source or the fuel cell.

Optionally, the method further comprises during the initialization phase of the fuel cell, selectively controlling power supply from the auxiliary power source and the fuel cell to power an Electrical Air Compressor (EAC) unit based at least on the SOC of at least one of the auxiliary power source or the fuel cell.

To further clarify the advantages and features of the methods, systems, and apparatuses/devices, a more particular description of the methods, systems, and apparatuses/devices will be rendered by reference to specific embodiments thereof, which are illustrated in the appended drawings. It is appreciated that these drawings depict only typical embodiments of the invention and are therefore not to be considered limiting of its scope as set out in the appended claims. The invention will be described and explained with additional specificity and detail with the accompanying drawings.

## BRIEF DESCRIPTION OF THE DRAWINGS

These and other features, aspects, and advantages of the invention will become better understood when the following detailed description is read with reference to the accompanying exemplary drawings in which like characters represent like parts throughout the drawings, wherein:

FIG. 1 illustrates a block diagram of a hybrid fuel cell system;
FIG. 2 illustrates an exemplary graph depicting timing diagrams of different types of currents flowing across the hybrid fuel cell system;
FIG. 3 illustrates an exemplary graph depicting timing diagrams of different operational characteristics of the hybrid fuel cell system; and
FIG. 4 illustrates a flowchart depicting a method for operating the hybrid fuel cell system.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the invention. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

## DETAILED DESCRIPTION OF FIGURES

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system and device, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the invention. Thus, appearances of the phrase "in an embodiment", "in another embodiment", "some embodiments", "one or more embodiments" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The term "unit" used herein may imply a unit including, for example, one of hardware, software, and firmware or a combination of two or more of them. The "unit" may be interchangeably used with a term such as logic, a logical block, a component, a circuit, and the like. The "unit" may be a minimum system component for performing one or more functions or may be a part thereof.

Embodiments of the invention will be described below in detail by way of example only and with reference to the accompanying drawings.

The terms Proton Exchange Membrane Fuel cell, PEMFC, fuel cell stack, and PEMFC stack have been used interchangeably throughout the description.

The term "AC" may correspond to "Alternating Current" and the term "DC" may correspond to "Direct Current".

Generally, an output power of a Proton Exchange Membrane Fuel cell (PEMFC) is influenced by operation characteristics such as stack humidification and operation temperature. During a cold start-up condition, the fuel cell stacks are dry and operating temperature is low, that restricts the capacity of the fuel cell to meeting initial power demand from a load device. Further, an Electrical Air Compressor (EAC) configured to supply the fuel cell stack with a required amount of oxygen from the air is also powered via the fuel cell resulting in further lag in reaching the operating temperature of the fuel cell.

An embodiment of the invention provides a hybrid fuel cell system comprising an auxiliary power source to provide an input power supply to the EAC unit during the initialization phase of the fuel cell. This prevents the lag associated with the EAC by allowing the EAC to operate at full capacity from a zero-time interval (i.e., from the PEMFC start event) even during the cold start-up condition. This also provides different power strategies to effectively maintain power requirements of different components of the hybrid fuel cell system including the load, the EAC, and/or the auxiliary power source. Thus, embodiments of the present invention improve cold start-up performance of the fuel cell.

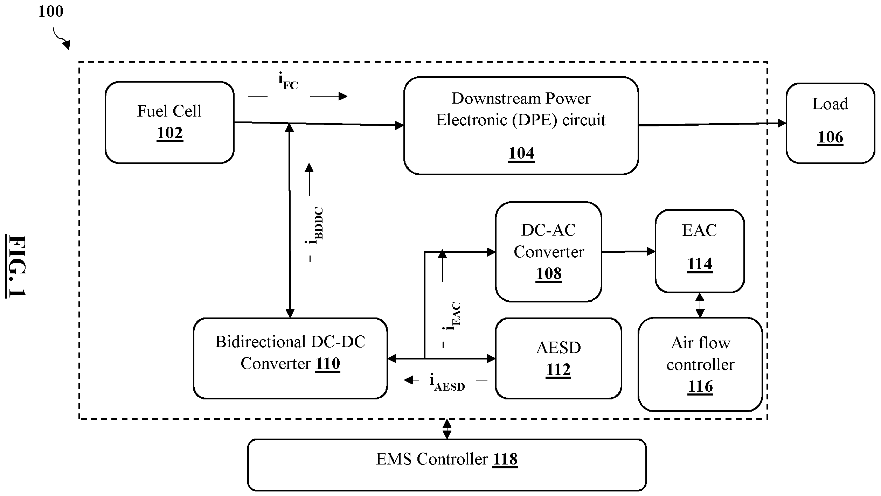

**FIG. 1** illustrates a block diagram of a hybrid fuel cell system 100 (hereinafter referred to as "the system 100"), according to one or more embodiments of the invention. In the illustrated embodiment, the system 100 may include, but is not limited to, a fuel cell 102, a Downstream Power Electronic (DPE) circuit 104, a bidirectional DC-DC converter 110 (interchangeably referred to as "BDDC 110"), an Auxiliary Energy Storage Device (AESD) 112 (interchangeably referred to as "the auxiliary power source 112"), a DC-AC converter 108, and an Electrical Air Compressor (EAC) unit 114 (interchangeably referred to as "the EAC 114"). The fuel cell 102, the DPE circuit 104, the bidirectional DC-DC converter 110, the AESD 112, the DC-AC converter 108, and the EAC 114 may be in communication with each other and with a load 106. The system 100 may be configured to supply power to the load 106. In one or more embodiments, the fuel cell 102 and the AESD 112 may be configured to selectively supply power to the load 106.

In an exemplary embodiment, the fuel cell 102 may correspond to a PEMFC, as discussed above. In one non-limiting embodiment, the system 100 may include a stack of fuel cells consisting of a plurality of individual fuel cells 102 which may be connected electrically either in series or in parallel to supply the required power to the load 106. In general, the fuel cell 102 may include components such as, but not limited to, an anode, a cathode, a PEM, an electrolyte, and bipolar plates. At the anode, hydrogen molecules are split into protons (H+) and electrons (e-). At the cathode, oxygen gas ($O_2$) is introduced, and the oxygen molecules combine with electrons (from an external circuit) and protons (transported through the electrolyte) to form water ($H_2O$). The PEM is positioned between the anode and the cathode and allows only protons to pass through while blocking the electrons. The PEM serves as the electrolyte in a PEMFC. The bipolar plates are placed on either side of the PEM to distribute reactants (hydrogen and oxygen) and collect the electrical current produced. The fuel cell 102 may also include one or more additional components, however a detailed description and corresponding description of such components has been omitted for the sake of brevity. Primarily, the fuel cell 102 may be configured to supply the required power supply to the load 106 via the DPE circuit 104 during an operation phase. The operational phase may correspond to a time interval when the fuel cell 102 is sufficiently humidified and has reached the operating temperature, and is configured to supply power with full capacity. Further, the fuel cell 102 may also be configured to selectively supply power to the EAC 114 during the operational phase and/or the AESD 112 for charging of the AESD 112. In an exemplary embodiment, the DPE circuit 104 may draw a fuel cell current ($i_{FC}$) from the fuel cell 102 during the operation phase.

In the illustrated embodiment, the AESD 112 may correspond to one of, but not limited to, a super capacitor, an ion battery, a low temperature metal battery, and a low temperature colloid battery. The AESD 112 may be connected to the EAC 114 via the DC-AC converter 108. In one non-limiting embodiment, the AESD 112 may be configured to provide an input power supply to the EAC 114 during an initialization phase of the fuel cell 102. The input power supply may correspond to an amount of power required for the operation of the EAC 114 such that the EAC 114 is able to operate from the zero time instance. The initialization phase of the fuel cell 102 may correspond to a time interval required by the fuel cell 102 to reach the operating temperature and/or generate the power with its full capacity. Specifically, the AESD 112 may act as a DC power source configured to supply power for the operation of the EAC 114 at least during the initialization phase of the fuel cell 102. The AESD 112 may also be electrically connected with the load 106 and the fuel cell 102. In one embodiment, the AESD 112 may selectively supply power to the load 106 during the initialization phase of the fuel cell 102. Thus, the AESD 112 may serve as a main source for EAC 114 of power during a start-up of the fuel cell 102. In the illustrated embodiment, the AESD 112 may supply the required power/input power supply to the EAC 114 via the DC-AC converter 108. Further, an AESD current ($i_{AESD}$) may flow across the AESD 112.

The DC-AC converter 108 may be configured to facilitate conversion of voltage levels associated with the AESD 112 to an operational voltage of the EAC 114. In particular, the DC-AC converter 108 may be configured to convert the DC power supply from the AESD 112 to an AC power supply as required by the EAC 114. In an exemplary embodiment, the DC-AC converter 108 may employ one or more switching circuits to modulate the received DC power supply from the AESD 112 to the AC power output at a desired voltage and frequency as required for the operation of the EAC 114. In one or more embodiments, the DC-AC converter 118 may include, but is not limited to, a voltage control function, a current control function, and a frequency converter.

The EAC 114 is operatively coupled with the fuel cell 102 and may be deployed in an air flow path of the fuel cell 102 to maintain the required air flow in the fuel cell 102. In conventional approaches/solutions, the EAC 114 is powered via the fuel cell. However, as mentioned above during the cold start-up, the stack of the fuel cell is dry, and the fuel cell also has low operating temperature. Therefore, the fuel cell fails to meet the power requirement of the EAC 114 which restricts the capacity of the EAC 114 to maintain the required air flow. Thus, in an exemplary embodiment, the EAC 114 is powered via the AESD 112 that prevents this restriction and enables the EAC 114 to operate with full capacity from the zero-time interval, i.e., from the start of the fuel cell 102. In particular, the EAC 114 powered using the AESD 112 is able to supply required oxygen to the fuel cell 102 from the zero time instance. In one non-limiting embodiment, the EAC 114 may be controlled using an Energy Management Scheme (EMS) to effectively maintain an air flow rate at the fuel cell 102. The EMS may control an EAC current ($i_{EAC}$) flowing across the EAC 114. In one non-limited embodiment, the EMS may be implemented by an air flow controller 116. The air flow controller 116 may regulate the amount of air supplied to the fuel cell stack 102 via the EAC 114 based on various factors such as, but not limited to, power demand, temperature, and system efficiency. In a fuel cell system, maintaining the correct air-to-fuel ratio is crucial for optimal performance and efficiency. The airflow controller 116 ensures that the right amount of air is supplied to the fuel cell stack 102 at any given operating condition. Therefore, the air flow controller 116 may monitor various operational conditions of the fuel cell 102 to adjust the operation of the EAC 114.

In an exemplary embodiment, the BDDC 110 (may also be referred to as the converter circuit 110) may be configured to electrically connect the AESD 112 to the load 106. Further, the BDDC 110 may be configured to electrically connect the fuel cell 102 to the EAC 114 and/or the AESD 112. In the illustrated embodiment, the BDDC 110 may connect the AESD 112 and the fuel cell 102 in parallel and to the DPE circuit 104. The BDDC 110 may be configured to maintain a desired voltage level at each of the fuel cell 102 and the AESD 112. For instance, during the initialization phase of the fuel cell 102, the BDDC 110 may enable the AESD 112 to supplement the fuel cell 102 to provide collective power supply to the load 106. This ensures that the fuel cell 102 gets sufficient time to power-up and meets the power requirement of the load 106 without significant delay. In one embodiment, the BDDC 110 may also be configured to enable the fuel cell 102 to provide either the input power supply or a supplement power supply to the EAC 114 during the operational phase of the fuel cell 102. Thus, the BDDC 110 may prevent the voltage level of the AESD 112 from going beyond a predefined threshold value. One non-limiting example of such predefined threshold value may be 50% of State of Charge (SOC) of the AESD 112. Furthermore, BDDC 110 may be configured to enable the fuel cell 102 to charge the AESD 112 during the operation phase when the SOC of the AESD 112 goes below the predefined threshold value. Thus, the BDDC 110 effectively maintains a desired voltage level at each of the fuel cell 102 and the AESD 112. A current flowing across the BDDC 110 may be referred to as a BDDC current ($i_{BDDC}$). In one or more embodiments, the BDDC 110 may include, but is not limited to, a voltage control function, a current control function, and a frequency converter.

In the illustrated embodiment, the DPE circuit 104 may be connected to the fuel cell 102, the AESD 112, and the load 106. The DPE circuit 104 may be configured to generate the collective power supply for the load 106 based on the power supplies received from the fuel cell and the AESD 112. Specifically, during the initialization phase of the fuel cell 102, the DPE circuit 104 may effectively utilize the fuel cell 102 and the AESD 112 to meet the power requirement of the load 106. The DPE circuit 104 may include components such as, but not limited to, a DC-DC boost converter, an inverter, and a single-stage boost inverter. Said components of the DPE circuit 104 may enable effective conversion of the received power supply to the desired power supply as required by the load 106. The DPE circuit 104 may be configured to up-scale or down-scale the received power supply to meet the power requirements of the load 106. In one or more embodiments, the DPE circuit 104 may include, but is not limited to, a voltage control function, a current control function, and a frequency converter.

In an exemplary embodiment, the load 106 may correspond to a Transport Refrigeration Unit (TRU). The TRU may be adapted to provide desired environmental parameters, such as, but not limited to, temperature, pressure, humidity, carbon dioxide, ethylene, ozone, light exposure, vibration exposure, and other conditions to a cargo compartment of a container and/or a vehicle. In one or more embodiments, the vehicle may be used to transport and distribute cargo, such as perishable goods and environmentally sensitive goods, herein referred to as perishable goods. The perishable goods may include, but are not limited to, fruits, vegetables, grains, beans, nuts, eggs, dairy, seed, flowers, meat, poultry, fish, ice, blood, pharmaceuticals, and any other suitable cargo requiring cold chain transport. In one or more embodiments, the TRU and/or the load 106 may include, but is not limited to, a compressor, an electric compressor motor, a condenser that may be air cooled, a condenser fan assembly, a receiver, a filter dryer, a heat exchanger, an expansion valve, an evaporator, an evaporator fan assembly, a suction modulation valve, and a controller that may include a computer-based processor (e.g., microprocessor).

The system 100 may also include an EMS controller 118 configured to control the BDDC 110, the EAC 114, and/or the DC-AC converter 108 to implement the required EMS. In one embodiment, the EMS controller 118 in combination with the air flow controller 116 may maintain an air flow rate to ensure sufficient oxygen in the fuel cell stack. In one or more embodiments, the EMS controller 118 may be a stand-alone unit or integral with the system 100. The EMS controller 118 may be configured to determine various operational parameters associated with the fuel cell 102 and the AESD 112. In an embodiment, the EMS controller 118 may be configured to monitor and maintain the SoC of the fuel cell 102 and/or the AESD 112.

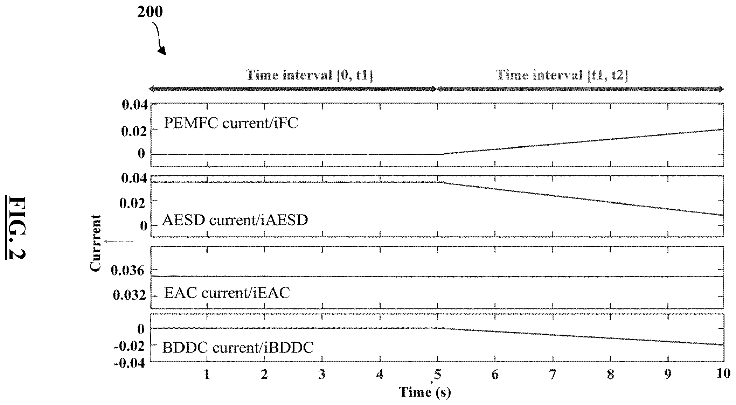

In an exemplary embodiment, the EMS controller 118 may be configured to determine the at least one operational characteristic associated with the fuel cell 102. The at least one operational characteristic may be indicative of at least air flow rate in the fuel cell, stack consumption rate, stack temperature, and stack humidification. In one or more embodiments, the system 100 may include one or more sensing mechanisms connected with the EMS controller 118 and the fuel cell 102, to enable effective detection of the operational characteristics of the fuel cell 102. As mentioned earlier, based on the monitored SoC and the determined operational characteristics, the EMS controller 118 may be configured to maintain a desired power level at each of the fuel cell 102 and the AESD 112. In one or more embodiments, the EMS controller 118 may implement different power strategies during the initialization phase and/or the operational phase of the fuel cell 102 based on the monitored SoC and the determined operational characteristic. For instance, during a start-up command at time instance zero, the EMS controller 118 may initialize the fuel cell 102 and the EAC 114. However, the EMS controller 118 may restrict the DPE circuit 114 to draw the fuel cell current ($I_{FC}$) from the fuel cell 102 during a first time interval, i.e., [o, t1] (shown in Fig. 2). Further, the EMS controller 118 may allow the EAC 114 to operate at full capacity by providing the power supply to the EAC 114 via the AESD 112. During a second time interval, i.e., [t1, t2] (shown in Fig. 2), the EMS controller 118 may enable the fuel cell 102 to gradually supply power to the load 106. Further, during the second time interval [t1, t2], the EMS controller 118 may control the BDDC 110 and the DPE circuit 104 to allow the AESD 112 to supplement the fuel cell 102 to supply power to the load 106. Moreover, after the second time interval [t1, t2], the fuel cell 102 may be in the operational phase, and the EMS controller 118 may controller the DPE circuit 104 such that the load 106 is fully powered via the fuel cell 102.

Furthermore, during the operational phase, the EMS controller 118 may control the BDDC 110 such that the fuel cell 102 may be able to power up the EAC 114 and/or the AESD 112 based at least on the SOC of the AESD 112.

In one or more embodiments, each of the air flow controller 116 and the EMS controller 118 may include a processor, memory, modules, and data. The modules and the memory are coupled to the processor. The processor can be a single processing unit or a number of units, all of which could include multiple computing units. The processor may be implemented as one or more microprocessors, microcomputers, microcontrollers, digital signal processors, central processing units, state machines, logic circuitries, and/or any devices that manipulate signals based on operational instructions. Among other capabilities, the processor is configured to fetch and execute computer-readable instructions and data stored in the memory.

The memory may include any non-transitory computer-readable medium known in the art including, for example, volatile memory, such as static random access memory (SRAM) and dynamic random-access memory (DRAM), and/or non-volatile memory, such as read-only memory (ROM), erasable programmable ROM, flash memories, hard disks, optical disks, and magnetic tapes.

The modules, amongst other things, include routines, programs, objects, components, data structures, etc., which perform particular tasks or implement data types. The modules may also be implemented as, signal processor(s), state machine(s), logic circuitries, and/or any other device or component that manipulates signals based on operational instructions.

Further, the modules can be implemented in hardware, instructions executed by a processing unit, or by a combination thereof. The processing unit can comprise a computer, a processor, such as the processor, a state machine, a logic array, or any other suitable devices capable of processing instructions. The processing unit can be a general-purpose processor which executes instructions to cause the general-purpose processor to perform the required tasks, or the processing unit can be dedicated to performing the required functions. In another embodiment of the present invention, the modules may be machine-readable instructions (software) which, when executed by a processor/processing unit, perform any of the described functionalities.

The embodiment illustrated in Fig. 1 is exemplary in nature and the system 100 may include any additional component that may be required to support the desired functionality of the system 100, i.e., to improve cold start-up of the fuel cell 102.

FIG. 2 illustrates an exemplary graph 200 depicting timing diagrams of different types of currents flowing across the hybrid fuel cell system 100, according to one or more embodiments of the invention. The graph 200 corresponds to a time interval t0-t2 which is further divided into two time intervals, i.e., a first time interval [0-t1] and a second time interval [t1-t2]. The time interval [0-t2] may correspond to the initialization period of the fuel cell 102 from the cold start-up condition. At zero time interval, the system 100 and/or the EMS controller 118 may receive a fuel cell initialization command (for example, a FC_start_signal) to supply power to the load 106. The two time intervals, i.e., the first time interval [0-t1] and the second time interval [t1-t2] may enable soft cold start-up of the fuel cell 102. In particular, during the first interval, i.e., the time interval [0, t1], the fuel cell 102 is starting from a cold temperature condition after a long-haul period, which implies the fuel cell stack is dry, and the operating temperature is low. Thus, during the first time interval, the fuel cell 102 may not be able to supply the starting load/transient power demand to the load 106. Therefore, during the first time interval, the system 100 and/or the EMS controller 118 may keep ($i_{FC}$) as 0 to speed up the warming process of the fuel cell 102. Further, during the first time interval [0, t1], the system 100 and/or the EMS controller 118 may power-up the EAC 114 via the AESD 112. This may prevent lag associated with the EAC 114, and the EAC 114 may initiate the supply of the air flow to the fuel cell 102 from the time instance 0. Thus, the EAC 114 may get sufficient time to maintain and/or to reach the required air flow rate in the fuel cell stack. In an exemplary embodiment, during the first time interval [0, t1], the current flowing across the system 100 may be defined by the following equation 1: a)

$$i_{EAC} = i_{AESD}, \text{ and } i_{FC} = i_{BDDC} = 0. \dots(1)$$

In particular, during the first time interval [0, t1], the system 100 may wait and halt supply of power to the load 106.

During the second time interval [t1, t2], the EAC 114 may already have pumped sufficient air to the fuel cell 102, and the fuel cell 102 may also start ramping up the power generation. In particular, at time instance t1, the fuel cell 102 may be ready to supply power to the load. However, to ensure the fuel cell stack reaches its operating temperature (for example, 65°C) and is able to supply power with full capacity, during the second time interval [t1, t2], the AESD 112 may supplement the fuel cell 102 to supply collective power supply to the load 106. In particular, for the interval [t1, t2], the system 100 and/or the EMS controller 118 may slowly ramp up the fuel cell power considering all the operating constraints. Further, the heat generated as a result of the current drawn out from the fuel cell 102 aids in reaching the operating temperature faster. In some embodiments, during the second time interval [t1, t2], the EAC 114 may be partially powered via the AESD 112 and partially via the fuel cell 102 through the bidirectional DC-DC converter 110. Thus, during the second time interval [t1, t2], the $i_{EAC}$ may be given by the following equation 2:

$$|i\_EAC| = k*|i\_BDDC| + (1-k)*|i\_AESD|, \text{and}$$

$$i\_FC = -i\_BDDC \qquad\qquad \dots(2)$$

Here, k may correspond to a portion of the EAC current supplied by the fuel cell through the bidirectional DC-DC converter 110, and (1-k) may correspond to a portion of current supplied by the AESD 112. The value of k may depend on a ramp up rate set by the controller.

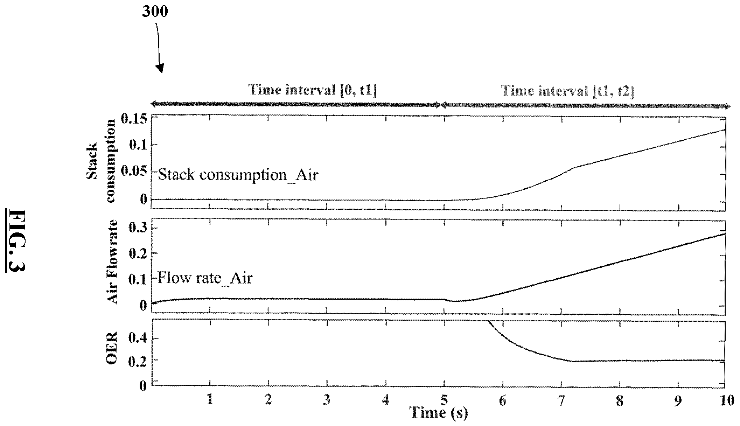

**FIG. 3** illustrates an exemplary graph 300 depicting a timing diagram of different operational characteristics of the hybrid fuel cell system, according to one or more embodiments of the invention. During interval [0, t1] the controller may maintain the required/set air flow rate (referred to as $W_{O_2,ca,in}$) for ensuring enough oxygen in the fuel cell 102 to allow the fuel cell 102 controlled ramp-up during the second time interval [t1, t2]. Further, during the first time interval [0, t1], an air stack consumption ($W_{O_2,ca,re}$) of the fuel cell 102 may be zero, thereby resulting in extremely high Oxygen Access Ratio (OER) (defined as $\lambda_{O2}$). The OER may be defined by equation 3 as mentioned below:

$$\lambda_{O_2} = \frac{W_{O_2,ca,in}}{W_{O_2,ca,re}} \qquad\qquad (3)$$

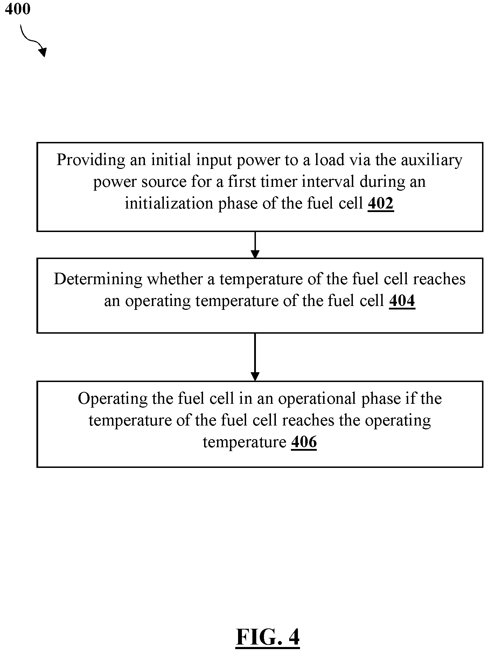

**FIG. 4** illustrates a flowchart depicting a method 400 for operating the hybrid fuel cell system, according to one or more embodiments of the invention. The method 400 may be implemented by the system 100.

At step 402, the method 400 may include providing an initial input power to the load 106 via the auxiliary power source 112 for the first timer interval [0, t1] during the initialization phase of the fuel cell 102.

At step 404, the method 400 may include determining whether a temperature of the fuel cell 102 reaches an operating temperature of the fuel cell 102.

At step 406, the method 400 may include operating the fuel cell 102 in the operational phase if the temperature of the fuel cell 102 reaches the operating temperature.

In one embodiment, the initialization phase corresponds to a time period required by the fuel cell to reach an operating condition, associated with the operating temperature, from a cold temperature condition.

The method 400 may also include selectively controlling power supply from the auxiliary power source 112 and the fuel cell 102 to supply collective power supply to the load 106 for the second time interval [t1, t2] based at least on a State of Charge (SOC) of at least one of the auxiliary power source 112 or the fuel cell 102.

The method 400 may also include selectively controlling power supply from the auxiliary power source 112 and the fuel cell 102 to power the EAC 114 based at least on the SOC of at least one of the auxiliary power source 112 or the fuel cell 102.

While the above steps of Figure 4 are shown and described in a particular sequence, the steps may occur in variations to the sequence in accordance with various embodiments of the invention. Further, the details related to various steps of Figure 4, which are already covered in the description related to Figures 1-3 are not discussed again in detail here for the sake of brevity.

An embodiment of the present invention therefore improves the cold start-up performance of the fuel cell. Furthermore, the embodiment emits out the lag associated with the EAC during the cold start-up of the fuel cell. Moreover, the embodiment enables effective and efficient power strategies to sufficiently supply power to the load and maintain a SOC at the fuel cell and/or the auxiliary power source.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

**Claims**

1. A hybrid fuel cell system (100), comprising:

   a fuel cell (102) adapted to supply power to a load (106);
   an Electrical Air Compressor, EAC, unit (114) operatively coupled with the fuel cell;
   an auxiliary power source (112) connected to the EAC unit via a Direct Current to Alternating Current, DC-AC, converter (108), wherein the auxiliary power source is configured to provide an input power supply to the EAC unit at least during an initialization phase of the fuel cell; and
   a converter circuit (110) configured to perform at least one of:

   enabling the auxiliary power source to supplement the fuel cell to provide collective power supply to a load during the initialization phase of the fuel cell;
   enabling the fuel cell to provide either the input power supply or a supplement power supply to the EAC unit during an operational phase of the fuel cell; and
   enabling the fuel cell to charge the auxiliary power source.

2. The hybrid fuel cell system (100) of claim 1, further comprising:
   a Downstream Power Electronics, DPE, circuit (104) connected to the fuel cell (102), the auxiliary power source (112), and the load (106), wherein the DPE circuit is configured to generate the collective power supply for the load based on power supply received from the fuel cell and the auxiliary power source.

3. The hybrid fuel cell system (100) of claim 2, wherein the DPE circuit (104) comprises at least one of a DC-DC boost converter, an inverter, and a single-stage boost inverter.

4. The hybrid fuel cell system (100) of any preceding claim, wherein the auxiliary power source (112) comprises at least one of a super capacitor, an ion battery, a low temperature metal battery, and a low temperature colloid battery.

5. The hybrid fuel cell system (100) of any preceding claim, comprising a controller (118) configured to control the DC-AC converter (108) to regulate the input power supply to the EAC unit (114) from the auxiliary power source (112) during the initialization phase of the fuel cell (102).

6. The hybrid fuel cell system (100) of any preceding claim, further comprising an air flow controller (116) connected to the EAC (114), wherein the air flow controller is configured to maintain an air flow rate within the fuel cell (102) during at least one of the initialization phase and the operational phase of the fuel cell.

7. A method of operating a hybrid fuel cell system (100) comprising at least a fuel cell (102) and an auxiliary power source (112), the method comprising:

   providing an initial input power to a load (106) via the auxiliary power source for a first timer interval during an initialization phase of the fuel cell;
   determining whether a temperature of the fuel cell reaches an operating temperature of the fuel cell; and
   operating the fuel cell in an operational phase if the temperature of the fuel cell reaches the operating temperature.

8. The method of claim 7, wherein the initialization phase corresponds to a time period required by the fuel cell (102) to reach an operating condition, associated with the operating temperature, from a cold temperature condition.

9. The method of any of claims 7 or 8, further comprising:
   during the initialization phase of the fuel cell (102):
   selectively controlling power supply from the auxiliary power source (112) and the fuel cell to supply collective power supply to the load for a second time interval based at least on a State of Charge, SOC, of at least one of the auxiliary power source or the fuel cell.

10. The method of any of claims 7 to 9, further comprising:
    during the operation phase of the fuel cell (102):
    selectively controlling power supply from the auxiliary power source (112) and the fuel cell to power an Electrical Air Compressor, EAC, unit (114) based at least on the SOC of at least one of the auxiliary power source or the fuel cell.

**FIG. 1**

**FIG. 2**

**FIG. 3**

400

Providing an initial input power to a load via the auxiliary power source for a first timer interval during an initialization phase of the fuel cell **402**

Determining whether a temperature of the fuel cell reaches an operating temperature of the fuel cell **404**

Operating the fuel cell in an operational phase if the temperature of the fuel cell reaches the operating temperature **406**

**FIG. 4**

## EUROPEAN SEARCH REPORT

Application Number

EP 25 16 3919

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/257637 A1 (NAMBA RYOUICHI [JP]) 19 August 2021 (2021-08-19) * paragraphs [0022], [0025], [0041] - [0057], [0060] - [0068]; figures 2, 3, 4, 5, 6, 7, 8 * | 1-10 | INV. H02J7/34 H01M16/00 H01M8/04089 H01M8/04225 H01M8/04302 |
| X | US 2009/258256 A1 (LIMBECK UWE M [DE] ET AL) 15 October 2009 (2009-10-15) * paragraphs [0014], [0015], [0039], [0042] - [0045], [0048], [0049], [0056], [0058], [0063] - [0069], [0072] - [0080]; figures 1, 5, 6 * | 1-10 | H01M8/04537 H01M8/0432 B60L58/31 B60L58/40 H01M8/04858 H01M8/04746 B60L58/14 |
| A | US 2014/342258 A1 (BURCH STEVEN D [US] ET AL) 20 November 2014 (2014-11-20) * the whole document * | 1-10 | B60L58/15 |
| A | JP 2001 229943 A (NISSAN MOTOR) 24 August 2001 (2001-08-24) * the whole document * | 1-10 | ADD. H01M8/10 |

TECHNICAL FIELDS SEARCHED (IPC)

H01M
B60L
H02J

The present search report has been drawn up for all claims

| Place of search | Date of completion of the search | Examiner |
|---|---|---|
| The Hague | 21 July 2025 | Ferreira Marinha, D |

EPO FORM 1503 03.82 (P04C01)

**ANNEX TO THE EUROPEAN SEARCH REPORT**
**ON EUROPEAN PATENT APPLICATION NO.**

EP 25 16 3919

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2025

| Patent document cited in search report | Publication date | Patent family member(s) | Publication date |
|---|---|---|---|
| US 2021257637 A1 | 19-08-2021 | CN 113285104 A<br>DE 102021102320 A1<br>JP 7294182 B2<br>JP 2021131964 A<br>US 2021257637 A1 | 20-08-2021<br>19-08-2021<br>20-06-2023<br>09-09-2021<br>19-08-2021 |
| US 2009258256 A1 | 15-10-2009 | CN 102047485 A<br>EP 2277227 A1<br>KR 20100132542 A<br>US 2009258256 A1<br>WO 2009126692 A1 | 04-05-2011<br>26-01-2011<br>17-12-2010<br>15-10-2009<br>15-10-2009 |
| US 2014342258 A1 | 20-11-2014 | CN 101154739 A<br>DE 102007046057 A1<br>JP 4916991 B2<br>JP 2008091336 A<br>US 2008081224 A1<br>US 2014342258 A1 | 02-04-2008<br>24-04-2008<br>18-04-2012<br>17-04-2008<br>03-04-2008<br>20-11-2014 |
| JP 2001229943 A | 24-08-2001 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63573233